# EUROPEAN PATENT SPECIFICATION

(11) **EP 3 176 518 B1**
(45) Date of publication and mention of the grant of the patent: **31.07.2019**
(21) Application number: 16002280.2
(22) Date of filing: 25.10.2016
(51) Int. Cl.: F24S 23/00, F24S 23/79, F24S 25/00, F24S 30/40

(54) **SOLAR RAY CONCENTRATION SYSTEM FOR A POWER GENERATION SYSTEM**
SONNENSTRAHLKONZENTRATIONSSYSTEM FÜR EIN ENERGIEERZEUGUNGSSYSTEM
SYSTÈME DE CONCENTRATION DE RAYONS SOLAIRES POUR UN SYSTÈME DE PRODUCTION D'ÉNERGIE

(30) Priority: 02.12.2015 GB 201521313; 19.04.2016 GB 201606841
(43) Date of publication of application: 07.06.2017
(73) Proprietor: Otegui Van Leeuw, Jon, 81737 München (DE)
(72) Inventor: Otegui Van Leeuw, Jon, 81737 München (DE)

(56) References cited:
- WO-A1-2015/161921
- GB-A- 2 525 389
- US-A1- 2009 050 324

## Description

The present invention comprises a solar thermal power generation system which comprises the use of mirrors (1.4, 1.5, 1.7, 1.10, 1.13, 2.2, 2.3, 2.4) which are positioned one over the other along a tower-like mast structure (1.1) which all deflect the incoming solar rays (1.8) to a concentrated point down a channel (3.7, 3.15) which projects down towards the ground, hence bringing the solar ray concentration system's surface area to a minimum.

The present invention comprises a vertical mast structure (1.1) which comprises a plurality of systems positioned one on top of the other, with each system comprising a Plano concave mirror (1.7) which is positioned under a flat collection mirror (1.4), and which is positioned in front and slightly below a Plano convex mirror (1.6), such that said Plano convex mirror (1.6) is positioned closer to said vertical mast structure (1.1) than said Plano concave mirror (1.7).

The present invention comprises a vertical tower mast structure (1.1) which sustains a set of Plano concave mirrors (1.7) which are orientated such that the solar rays (1.8) deflected by the flat mirror (1.4) positioned above said concave mirrors (1.7), are directed and concentrated towards a Plano convex mirror (1.6), on which the solar rays (1.8) are concentrated and then deflected vertically downwards due to said Plano convex mirror's shape (1.6). The concentrated light rays are then deflected towards a horizontal projection away from said vertical mast (1.1) by a 45 degree inclined flat mirror (1.5, 2.2) which is positioned under said Plano convex mirror (1.6), and then reflected again vertically downwards by another flat 45 degree inclined mirror (1.10, 2.3).

After said system procedure, said solar rays are directed by a Plano concave mirror (1.7, 2.4) positioned under the lower positioned flat collection mirror (1.4) and directed again towards a Plano convex mirror (1.6) positioned at the same positon in accordance to the below mentioned components (1.7, 1.4, 2.4), such that the whole process starts again during a plurality of times, each time strengthening the intensity of the light rays concerned. When said light rays reach the bottom of said vertical mast structure (1.1), said solar rays are hence driven down towards flow of water (3.13) through a vertically projecting pipe (3.7, 3.15), where said concentrated light beam heat said water (3.9) instantaneously and convert it into steam in order to drive turbines, and hence drive generators to generate electricity.

A flat collection mirror (1.13) is positioned in front of said inner flat collection mirror (1.4) at each system level along said tower mast (1.1) in order to reflect solar light rays (1.8) which project at angles greater than 45 degrees from the ground level, hence reflecting said solar rays (1.8) to said inner flat collection mirror (1.4) which will in turn reflect these along the same previously mentioned solar ray concentration process.

GB 2525389 discloses a vertical projecting mast structure which comprises a plurality of mirrors in order to concentrate solar rays.
Figure 1 comprises a side view of the tower mast (1.1), along with a side view of the Plano concave mirrors (1.7), Plano convex mirrors (1.6) and flat mirrors (1.5, 1.10) which are positioned above each other and all attached to said tower mast structure (1.1).
Figure 2 comprises a side view of solar ray concentration system, but with the inner 45 degree inclined flat mirrors (2.2) being positioned just in front of said outer 45 degree flat mirrors (2.3) which reflect said concentrated light rays towards the inner area of said Plano concave mirrors (1.7, 2.4).

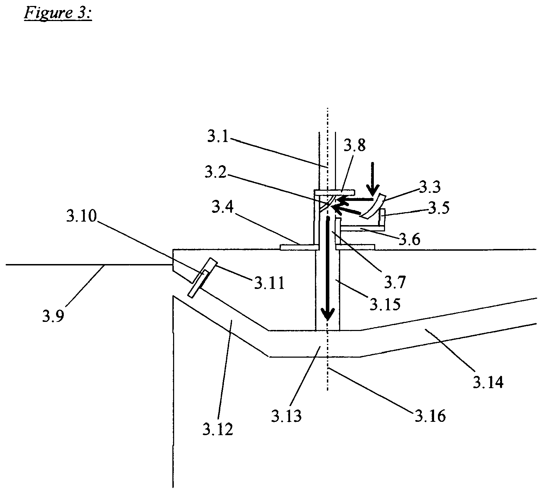

Figure 3 comprises a side cross-sectional view of the lower system architecture of said solar ray concentration system, including basement, water collection and evaporation circuit, and bottom light concentration system.

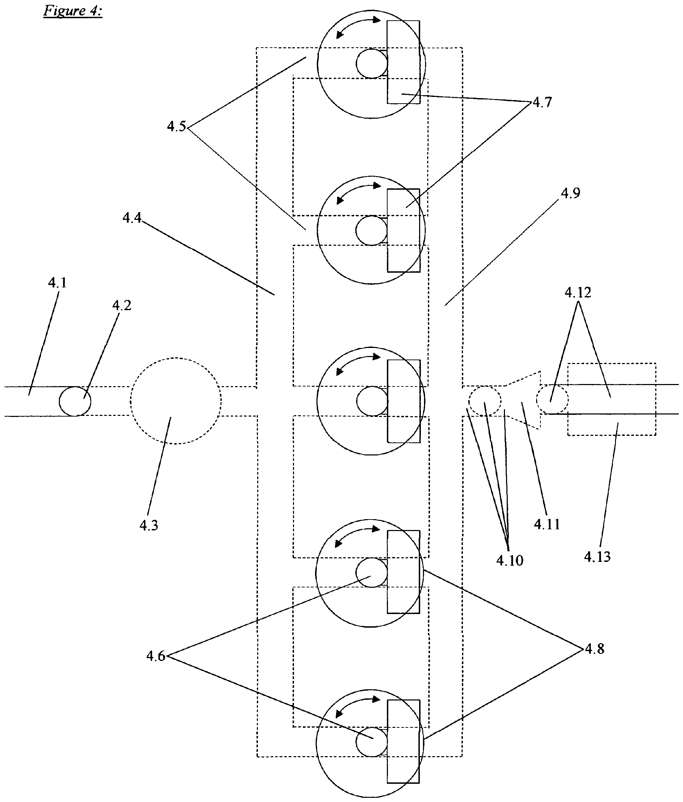

Figure 4 comprises a top view of the water pipe (4.4, 4.5, 4.9) distribution system which is comprised under said vertical tower masts (4.6), including steam turbine (4.11) and intake piping (4.1, 4.2).

The present invention comprises a vertical mast structure (1.1) which comprises a plurality of systems positioned one on top of the other, with each system comprising a Plano concave mirror (1.7) which is positioned under a flat collection mirror (1.4), and which is positioned in front of and slightly below a Plano convex mirror (1.6), such that said Plano convex mirror (1.6) is positioned closer to said vertical mast structure (1.1) than said Plano concave mirror (1.7). Each system below the upper system also comprises two oppositely positioned 45 degree inclined mirrors (1.5, 1.10), which drive the concentrated light rays (1.12) away from said tower mast structure (1.1), such that these are reflected vertically downwards, but further away to said tower structure (1.1). The first 45 degree inclined flat mirror (1.5) faces partly upwards and partly away from the tower mast (1.1) and towards the other 45 degree flat mirror (1.10). The other 45 degree inclined flat mirror (1.10) faces partly horizontally towards said mast (1.1) and hence towards the other mirror (1.5), and partly vertically downwards towards the lower Plano concave mirror (1.7) of the lower light concentration system.

So, the present invention comprises a vertical tower mast structure (1.1) which sustains a set of Plano concave mirrors (1.7) which are orientated such that the solar rays (1.8) deflected by the flat mirror (1.4) positioned above said Plano concave mirror (1.7), are directed towards a Plano convex mirror (1.6), on which the solar rays are concentrated and then deflected vertically downwards due to said Plano convex mirror's shape (1.6). The solar rays are then deflected horizontally away from said vertical mast by a 45 degree inclined flat mirror (1.5), and then reflected again vertically downwards by another flat 45 degree inclined mirror (1.10). After said system procedure, said solar rays are directed by a Plano concave mirror (1.7) positioned under the lower system's flat collection mirror (1.4) and directed again towards a Plano convex mirror (1.6) positioned on an equivalent position as on the upper system, such that the whole process starts again during a plurality of times, hence passing through a plurality of systems down said tower mast (1.1), each time strengthening the intensity of the light rays (1.12) concerned. When said light rays (1.12) reach the bottom of said vertical mast structure (1.1), said solar rays are hence driven down a flow of water, where those heat said water instantaneously and convert it into steam in order to drive turbines, and hence drive generators to generate electricity.

The system is configured such that said tower structure (1.1) comprises a plurality of systems which are mounted on top of each other. On each system, the components are positioned at a specific configuration. On each of said systems, a flat collection mirror (1.4) is positioned on top of a Plano concave mirror (1.7). Said Plano concave mirror (1.7) is inclined towards the tower structure (1.1), such that it (1.7) partly faces towards the tower structure, and partly towards the above positioned flat collection mirror (1.4). The Plano concave mirror (1.7) is designed such that it will receive all the light rays (1.12) which are reflected vertically downwards by said flat collection mirrors (1.4). Said Plano concave mirrors (1.7) are also positioned such that these will not only receive the light rays (1.12) which are reflected vertically downward from said flat collection mirrors (1.4), but also the concentrated light rays (1.12) which are reflected downwards by said outer 45 degree inclined flat mirror (1.10), which is positioned on top of the outer edge of said Plano concave mirror (1.7).

The inner 45 degree inclined flat mirror (1.5) of the upper system, and the Plano convex mirror (1.6) of the lower system, are both sustained by a common horizontally projecting member (1.2) in each system's case, and are hence both (1.5, 1.6) mounted on top of each other, with the inner 45 degree inclined flat mirror of the upper system (1.5) being mounted on top of the Plano convex mirror (1.6) of the lower system, such that said horizontally projecting member (1.2) sustains both elements (1.5, 1.6) and is positioned between the two (1.5, 1.6) for each system's case.

The Plano concave mirrors (1.7) are each supported by a vertically projecting member (1.9), which sustain these (1.9) to the horizontally projecting members (1.3) on which said mirrors (1.7) are attached to. Said horizontally projecting members (1.3) also sustain the lower system's flat collection mirror (1.4) for each system's case.

The outer 45 degree inclined flat mirror (1.10) is sustained by a vertically projecting member (1.11) which attaches to the Plano concave mirror (1.7) positioned below it (1.10).

The resulting concentrated light rays (1.12), once arriving at the bottom of the mast structure (1.1), can be deflected by a 45 degree inclined flat mirror horizontally towards an opening inside said mast (1.1), and then reflected again by another 45 degree inclined flat mirror housed inside the bottom volume of the mast (1.1), hence driving said concentrated light rays (1.12) vertically downwards until accessing the flowing water, in order to evaporate it and generate electricity by driving turbines which in turn drive generators. The first (the outer mirror) of said 45 degree inclined flat mirrors faces partly upwards and partly towards the mast structure (1.1), and hence partly towards the other 45 degree inclined flat mirror, while the other flat mirror (the inner mirror) partly faces towards the outer 45 degree inclined mirror, and partly downwards, into the lower volume of the mast structure (1.1), and hence towards the water flowing below said mast structure (1.1).

The Plano convex mirror (1.6) is positioned in front of said Plano concave mirror (1.7) and just near to said tower structure's mast (1.1). Said Plano convex mirror (1.6) is therefore positioned inwards near to said tower mast (1.1), and partly faces towards said Plano concave mirror (1.7), and partly vertically downwards, hence reflecting the concentrated light rays (1.12) vertically downwards into a vertical light beam (1.12). Said vertical light ray beam (1.12) is then reflected by a flat mirror (1.5) which is inclined at 45 degrees. Said flat mirror (1.5) hence faces partly upwards towards said Plano convex mirror (1.6), and partly horizontally outwards, hence facing oppositely and away from said tower mast, and towards the other 45 degree inclined flat mirror (1.10), such that said mirror (1.5) partly faces to said 45 degree inclined flat mirror (1.10) which reflects the concentrated light rays (1.12) to a vertical direction again. So, the second (1.10) of the two said 45 degree inclined flat mirrors (1.5, 1.10), which is the outer 45 degree inclined flat mirror (1.10), partly faces towards said inner 45 degree inclined flat mirror (1.5) and so towards said tower mast (1.1), and partly downwards towards the outer area of said Plano concave mirror (1.7).

The flat collection mirrors (1.4) of each system are sustained by two members (1.3), which are hence each positioned at the extreme side of said collection mirror (1.4). Said members house the actuators to orientate said collection mirror (1.4), and leave a space behind said collection mirror (1.4) in order for the concentrated light rays (1.12) coming from the upper system to be driven vertically downwards behind it (1.4).

As a result, in a system positioned on top, the light rays (1.8) are collected by said flat solar ray collection mirrors (1.4) and are concentrated by said Plano concave mirror (1.7) into said Plano convex mirror (1.6), from which these are reflected vertically downwards and driven to the next lower system, such that said light rays (1.12) are driven behind the lower system's flat solar collection mirror (1.4). After that operation, said light rays (1.12) are reflected horizontally away from said tower mast (1.1) by said inner 45 degree inclined flat mirror (1.5), and then again vertically downwards by said outer 45 degree incline flat mirror (1.10), such that in the lower system, the concentrated light rays (1.12) are then concentrated along with the light rays (1.8) reflected by the flat collection mirror (1.4) of said lower system. And so, said process is repeated during a plurality of times until said concentrated light rays (1.12) reach the bottom of said tower mast structure (1.1). Each process hence strengthens the intensity of the light rays (1.12).

After arriving to the bottom of the mast structure (1.1), said light rays (1.12) are reflected towards a horizontal direction towards an opening through said mast structure (1.1) by a 45 degree inclined flat mirror, into the lower volume of said tower mast (1.1), and then finally vertically downwards by another 45 degree inclined flat mirror which is positioned inside the lower volume of said mast structure (1.1), such that said light rays (1.12) are driven downwards into the lower volume of said tower mast (1.1), and so towards a flowing water channel, such that said concentrated light rays (1.12) heat the water while flowing under said concentrated light beam (1.12), which converts the water into steam instantaneously. The steam then drives turbines, which in turn drive generators in order to generate electricity.

The mirrors (1.5, 1.6, 1.7, 1.10) comprised on this system are aimed at offering a similar solar ray concentration effect than in the case of lenses, but by avoiding the transparency problem of the lenses, as well as the weight of the lenses, and so by avoiding the use of lenses to concentrate the solar rays into a concentrated solar ray beam.

Said previously stated elements are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

Said solar ray concentration system can hence be used to supply power and/or supply heat and/or supply water and/or comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, satellites, spacecraft, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, and dockyards.

The solar ray concentration system comprised in this invention can either be positioned onshore, or offshore on a floating object such as a raft, barrage, ship, or pontoon. However, said system should preferably be positioned on the ground and near to the sea, a river, or a lake. These water sources will supply the necessary water for steam generation, and hence for electricity production.

To summarise, the present invention comprises a vertically projecting mast structure (1.1) which comprises a plurality of systems which are mounted on top of the other down said mast (1.1) from top to bottom, and in which each of said systems comprises a flat collection mirror (1.4) which is sustained by two parallel horizontally projecting members (1.3) which sustain the Plano concave mirror (1.7) of the system positioned on top of the system concerned, such that said system comprises a Plano concave mirror (1.7) which faces towards the mast structure (1.1) and which is positioned below said flat collection mirror (1.4), which concentrates the solar rays (1.8) deflected by the flat collection mirror (1.4) towards a Plano convex mirror (1.6) which faces opposite to said mast structure (1.1), and which hence faces towards said Plano concave mirror (1.7), hence being positioned in front of and slightly above of said Plano concave mirror (1.7), and which is (1.6) nearer to said vertical mast structure (1.1) than said Plano concave mirror (1.7), so that said Plano convex mirror (1.6) deflects the solar rays (1.12) vertically downwards after being concentrated, into a vertical concentrated light ray (1.12) by said oppositely positioned Plano concave mirror (1.7), which is driven behind the flat collection mirror (1.4) of the system positioned below said system, and is then reflected towards a horizontal direction and away from said mast structure (1.1) by a 45 degree inclined flat mirror (1.5) which is positioned below the upper system's Piano convex mirror (1.6) and which partly faces upwards towards said Plano convex mirror (1.6) and partly horizontally away from said mast structure (1.1) and so towards another 45 degree inclined flat mirror (1.10), which is positioned horizontally in front of said inner 45 degree inclined flat mirror (1.5) in turn reflects said light rays (1.12) vertically downwards by partly facing towards the mast structure (1.1) and so towards the inner 45 degree inclined mirror (1.5), and partly downwards towards the Plano concave mirror (1.7) of said lower system, which is positioned below said outer 45 degree inclined flat mirror (1.10), as well as below the whole surface of the lower system's solar collection mirror (1.4), which hence concentrates the light rays deflected by both the outer 45 degree inclined flat mirror (1.10) and the said flat solar ray collection mirror (1.4) of said lower system, hence repeating said process in a plurality of times from the top to the bottom of said mast structure (1.1), and therefore concentrating and increasing the intensity of the light rays (1.12) at each system until obtaining a very high intensity light ray (1.12).

Said solar ray concentration system (1.1) is comprised of a plurality of systems which are mounted on top of the other down said mast (1.1) from top to bottom, and in which a flat collection mirror (1.13) is positioned outwards and sustained by an electric motor actuated rotational system (1.14) which connects to the bottom of said flat mirror (1.13), which is in turn connects to a vertical member (1.11) which connects these to the lower member's structure (1.3), such that said collection mirror (1.13) is positioned in front of each of said systems comprises a flat mirror (1.4) which is sustained by an electric motor actuated rotary system at the top end of said flat mirror (1.4) and which is sustained by two top positioned horizontal members (1.3) positioned at each side.

Said solar ray concentration system is comprised such that said outer flat collection mirror (1.13) is constantly oriented to reflect the solar rays (1.8) towards a horizontal direction towards the vertical mast (1.1) which sustains said structure, such that if the solar rays (1.8) project at angles high than 45 degrees to the ground, said mirror (1.13) reflects said solar rays (1.8) to the inner solar collection mirror (1.4), which is inclined at 45 degrees in order to reflect these (1.8) at 45 degrees vertically downwards.

Said solar ray concentration system is comprised such that said outer flat collection mirror (1.13) is positioned at the same angle as the angle of projection of the solar rays (1.8) to the ground, such that said rays are projected to the inner flat collection mirrors (1.4) which reflect said solar rays (1.8) directly vertically downwards, all this being programmed to the computer control unit which controls the rotational actuators (1.14) when the solar rays (1.8) project at an angle of 45 degrees or lower to the ground.

Said solar ray concentration system is comprised such that said outer flat collection mirrors (1.13) and its connecting members (1.11, 1.9) and rotational systems (1.14) are positioned on top of each other, each (1.13) at the same distance from each other and from the mast structure (1.1) which sustains the set solar ray concentration systems.

Said solar ray concentration system is comprised such that said inner flat collection mirror (1.4) is constantly inclined at an angle of 45 degrees, facing partly horizontally away from the mast structure (1.1) and partly vertically downwards when said outer flat collection mirror (1.13) initially reflects the incoming solar rays (1.8) towards said inner flat collection mirror (1.4).

Said solar ray concentration system is comprised such that said outer collection mirrors (1.13) are positioned at a greater horizontal distance from the main structural mast (1.1) than the inner collection mirror (1.4), such that said outer collection mirror (1.13) comprises a length which spans to the upper positioned horizontal members (1.3) when said mirror (1.13) is tilted at its highest inclination angle compared to the ground level.

The outer collection mirror (1.13) is inclined such that it will always reflect the solar rays towards a horizontal direction and towards the inner flat mirror (1.4). This however will occur only when the solar rays (1.8) shine at angles greater than 45 degrees to the ground. All the actuators (1.14) of both inner (1.4) and outer (1.13) collection mirrors are controlled by a centralised computerised control unit. The outer flat collection mirrors (1.13) are sustained from the lower ends. The length of the outer flat mirror (1.13) is such that the solar rays (1.8) which are reflected by it (1.13) will always be fully directed to the inner mirror (1.4) when being inclined at 45 degrees, such that said mirror (1.13) will be as vertically high as the inner mirror (1.4) when said inner mirror (1.4) is inclined at 45 degrees. The inner mirror's (1.4) length is such that all rays which are reflected by it (1.4) will always be directed vertically downwards towards the concave mirror (1.7) positioned under it (1.4).

The rotary actuators (1.14) of the outer mirrors (1.13) constantly rotate said outer mirrors (1.13) in order to reflect and drive the solar rays horizontally towards the inner mirror (1.4). The orientation which is actuated by the actuators (1.14) is fully computer controlled for the actuation (1.14) of each outer mirror (1.13).

The outer mirror (1.13) offers the advantage that a higher surface area will be available for solar ray collection and reflection when the solar rays project at angles greater than 45 degrees to the ground. This system will therefore increase the intensity of the solar rays reflected when the sun shines at high angles during the peak solar periods of the day, hence increasing significantly the intensity of the light rays, and hence maximising the system's power generation and energy generation efficiency.

When the solar rays (1.8) project at angles which are lower than 45 degrees to the ground, the computerised control unit is programmed to ensure that the surface of said outer flat collection mirrors (1.13) are inclined at exactly 90 degrees to the direction of projection of the solar rays (1.8), hence positioning aid outer mirrors (1.13) exactly perpendicular to the direction of projection of the solar rays. The purpose of this system feature is that this will avoid the outer mirrors (1.13) to generate any shading on the lower inner mirror (1.4) when the solar rays (1.8) project at shallow angles, hence maximising solar ray caption and reflection, and therefore maximising the system's energy generation efficiency.

Any shading produced by the outer mirrors (1.13) would impede part of the solar rays (1.8) to project on the inner mirrors (1.4) when the solar rays project at shallow angles, hence reducing the solar ray reflection efficiency, and hence reducing the system's power generation efficiency.

When said outer flat collection mirrors (1.13) are not in operation due to the angle of the incoming light rays (1.8) being 45 degrees or less in comparison with the ground level, said outer flat collection mirrors (1.13) are inclined to exactly the same inclination as said incoming solar light rays (1.8), such that the shade generated by said mirrors (1.13) is minimal on the lower inner flat collection mirrors (1.4), hence maximising light (1.8) collection from said mirrors (1.4), and so maximising the system's light concentration efficiency.

Said tower mast structure (1.1) is oriented about an axis (1.15) which is located along the centre of the crops-sectional view of said mast structure (1.1), which is circular, such that said mast is rotated along the ground or basement plane and about said axis (1.15) at the centre of said mast's (1.1) cross-sectional view, hence orienting said flat collection mirrors (1.4, 1.13), such that these (1.4, 1.13) are exactly frontally positioned to said incoming solar rays (1.8).

With said rotational mast (1.1) system, said mirrors (1.4, 1.13) can maximise solar ray collection by constantly comprising the surfaces of said mirrors (1.4, 1.13) positioned at 90 degrees perpendicular to the direction of projection of said incoming solar rays (1.8).

Said mirrors (1.4, 1.13) are hence constantly positioned in front of said incoming solar rays (1.8), but are not each oriented individually. The tower mast structure (1.1) is oriented individually about said axis (1.15) according to the sun's positon along the horizon by an electric motor actuated system which is positioned under the basement (3.4) of said mast (1.1). Said motor rotates the tower mast structure (1.1) to the required orientation. The electric motor actuation system is connected to a computerised controller which sends data to the electric rotary system according to the date and time of the year concerned. All of this data is programmed into the computerised data controller, which feeds data to the electric rotational system.

Each of said flat solar light collection mirrors (1.4, 1.13) is however oriented according to the angle of the incoming solar rays (1.8) in comparison to the ground or basement (3.4) plane. Said mirrors (1.4, 1.13) are oriented by an electric actuated system (1.14, 1.16) which is positioned at the point of contact between said mirrors (1.4, 1.13) and the corresponding supporting members (1.3, 1.11).

Said systems (1.14, 1.16) comprise electric actuators (1.14, 1.16) being positioned at each of said flat mirrors (1.4, 1.13), which actuate the rotational movements by the means of electric motors. The orientation data is supplied by a computerised data controller, into which all the solar ray (1.8) income angles and the sun's position along the horizon is programmed for the whole years' time. Said computerised controller feeds the actuators (1.14, 1.16) with the required data in accordance to the date and solar orientation according to the position of the sun along the horizon for the date concerned. The transmission and supply of data form the computerised controller to the actuators (1.14, 1.16) can be wireless or by the means of wired communication.

The horizontal supports (1.2, 2.1) which sustain said Plano convex mirrors (1.6) and said inner 45 degree inclined mirrors (1.5, 2.2) can also be comprised as a longer projecting geometry in order to sustain the outer 45 degree inclined flat mirrors (2.3) being positioned over the inner area of said Plano concave mirrors (2.4) being positioned under said outer 45 degree flat mirrors (2.3). This design will offer the advantage that the concentrated solar rays which are reflected by said Plano concave mirrors (2.4) after being deflected by said inner flat collection mirrors (1.4), will not cross the concentrated solar rays perpendicularly, as these will be concentrated towards said Plano convex mirror (1.6) simultaneously with the outer reflected solar rays (1.8) being concentrated. In the case of this design (2.1, 2.3, 2.4), said concentrated solar rays are projected vertically upwards and towards said mast structure (1.1) from the surface of said Plano concave mirrors (2.4) to that of said Plano convex mirrors (1.6).

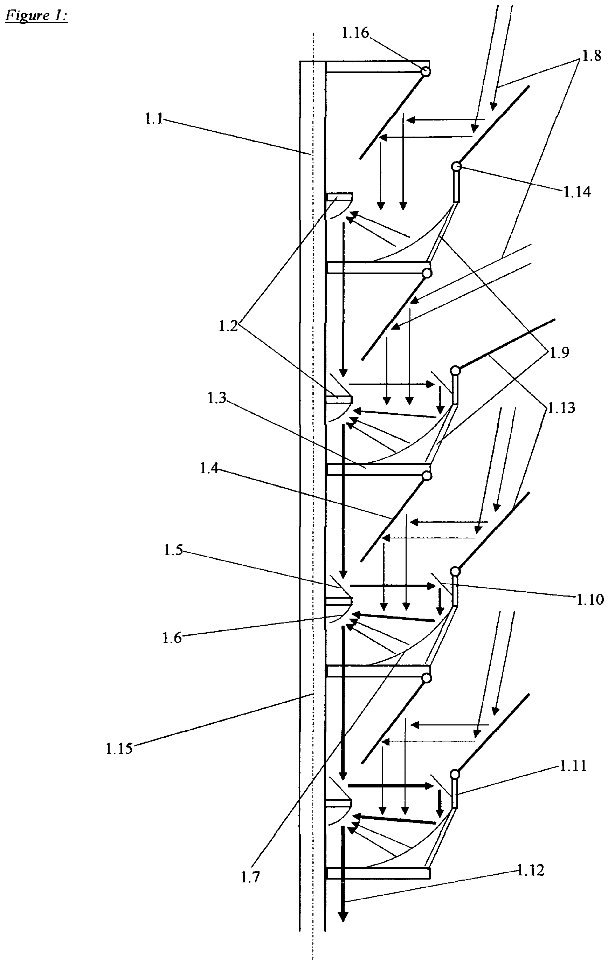

This design (2.1, 2.3, 2.4) will not really make a difference in efficiency, but is a slightly alternative design to that shown on Figure 1. In the design concerned (2.1, 2.3, 2.4), the Plano concave mirrors (2.4) will hence be positioned slightly more inward than those (1.7) comprised on Figure 1, hence offering a wider vertical spacing of exposure for solar ray (1.8) collection to the outer flat collection mirrors (1.13), hence increasing the efficiency of solar ray (1.8) collection by said system when said solar rays (1.8) project at angles which are higher than 45 degrees to the ground level. This is because the solar rays will now be reflected by the inner area of said Plano concave mirrors (2.4).

The power generation system comprised in this invention, comprises a lower concentration system, which simultaneously concentrates and drives the high intensity light rays into a hollow pipe (3.7) positioned inside the lower area of said mast structure (3.1). The system concerned comprises a concave mirror (3.3) which is positioned just under the lowest Plano convex mirror (1.6) which is attached to said mast structure (1.1, 3.3). Said concave mirror is positioned in front of a convex mirror (3.2) which is positioned inside the lower structure of said mast structure (3.1), and which faces said concave mirror (3.3) by the means of an opening which is positioned just between the two mirrors (3.2, 3.3).

Said concave mirror (3.3) is positioned such that it (3.3) partly faces vertically upwards towards the lowest Plano convex mirror (1.6), and partly horizontally towards said mast structure (1.1, 3.1), and hence towards said inner convex mirror (3.2). Said convex mirror (3.2) is positioned on the top volume of a hollow cylindrical pipe (3.7) which is comprised inside said lower mast structure (3.1), such that it (3.2) projects partly horizontally towards said concave mirror (3.3), and hence away from said mast structure (1.1, 3.1), and partly vertically downwards towards said pipe (3.7) which is embedded inside said lower mast structure (3.1).

So, said system concentrates the concentrated light rays even further into a square or rectangular cross-sectioned light beam. The concentrated light rays are projected downwards from the lowest Plano convex mirror (1.6) as a linear cross-sectioned light beam towards said concave mirror (3.3). Said concave mirror (3.3) then reflects said concentrated solar rays, and concentrates these from all angles of said concave mirror (3.3) towards a focal point, and so towards said lower mast structure (3.1).

Said rays are hence driven into said opening, and therefore into the lower mast structure (3.1), hence being entirely driven towards said inner convex mirror (3.2). Said inner convex mirror (3.2) finally reflects said concentrated light rays into a vertically downwards projecting square or hexagonal cross-sectioned light beam, such that said light rays are driven down said pipe (3.7). Said pipe is embedded inside said lower mast structure (3.1), but connects directly to a vertical pipe (3.15) which is positioned into the basement. Said lower vertical pipe (3.15) drives said light rays vertically downwards towards a horizontally projecting water pipe (3.13), such that said light rays evaporate the flowing water (3.9) under said light beam in the evaporation area (3.13) due to the high temperatures of said light rays.

The evaporated water is driven by natural circulation upwards and away from said evaporation area (3.13) as steam through a steam collection pipe (3.14). Said steam then drives at least one steam turbine, which then in turn drives generators to generate electricity.

The concentrated light rays are concentrated before or after reaching the focal point of said concave mirror (3.3), by said convex mirror (3.2), depending on design convenience. The outer surface of said convex mirror (3.2) can also be positioned just at the focal point of said concave mirror (3.3) if the design concerned requires extremely high intensity light rays. Very intensely concentrated light rays can be used for applications which require very high temperatures. Said applications can vary from steam generation for power generation, to the separation of the flowing water into hydrogen and oxygen due to the very high temperatures and pressures that would be present in the evaporation area (3.13).

In that case, two separate pipes will connect said evaporation area (3.13), one being to collect oxygen, and the other one to collect hydrogen. The intakes of each of said pipes would comprise nanofabricated membranes in order to collect only oxygen in one pipe, while collecting only hydrogen into the other pipe. This system can be used to supply industry with pure oxygen, while supplying industry with hydrogen. Hydrogen should however be mostly supplied to petrol stations, train stations, harbours, ports and airports as fuel for aerospace, train, road, ship and vessel propulsion applications. This will result in a free of charge fuel supply, with which aircraft, trains, ships, and road vehicles would be able to use a totally emission-free and CO2 free fuel source, which will be supplied from fully free of charge solar energy.

The basement structure comprises a rotational base (3.4) onto which said tower mast structure (1.1, 3.1) is stabilised, hence providing stability to said tower mast structure (1.1, 3.1) while being part of the rotational orientation system (3.4) of said mast structure (1.1, 3.1). Said rotational system rotates about said axis (3.16), which is exactly on the middle of the cross-section of said mast structure (1.1, 3.1), hence offering maximum stability to said system sustaining mast (1.1, 3.1), while maximising ease of rotation of said mast structure (1.1, 3.1), and hence maximising ease of solar collection by said inner (1.4) and outer (1.13) flat solar ray collection mirrors.

The horizontal member (3.8) which separates the opening of the lower mast structure (3.1) from the top area of said mast structure (1.1, 3.1), projects such that the end of said horizontal member (3.8) does not interfere with the downward projecting concentrated light rays, but is long enough to protect said opening from falling dirt and rain, hence impeding these of entering into said opening, and hence into the vertical pipes which are embedded inside the lower mast structure (3.7) and inside the basement (3.15), as well as under (3.15) said tower mast structure (1.1, 3.1), hence maximising the system's functionality.

Said concave mirror (3.3) is supported by a vertically projecting member (3.5) which attaches to its (3.3) rear central area. Said vertically projecting member (3.5) is in turn supported by a horizontally projecting member (3.6) which attached the entire structure (3.3, 3.5) to the lower mast structure (3.1), as said horizontally projecting member (3.6) connects to said mast structure (1.1, 3.1).

Said water flow pipe (3.12, 3.13, 3.14) comprises an intake pipe (3.12) which drives said collected water (3.9) by gravity to an evaporation area (3.13), where said water (3.9) is evaporated into steam, which is then driven by said pipe (3.14) towards at least one steam turbine, which drives generators to generate electrify with said steam. The water (3.9) is collected from a water basin. Said basin can be a sea, lake, river or any type of aquifer available. The water flows as a thin water (3.9) flow along the evaporation area (3.13) such that the concentrated solar rays can instantly convert said flowing water (3.9) into steam. This means that the cross-section of the pipe (3.12, 3.13, 3.14) at the evaporation area (3.13) is wider than that at the intake pipe (3.12). Said cross-section of the pipe (3.12, 3.13, 3.14) is wider at the evaporation area (3.13) than that at the intake pipe (3.12) when said pipe is viewed from a top or bottom view.

The water (3.9) flow is regulated by a water flow control gate (3.10) which is positioned along the upper wall of the intake pipe (3.12), and near to the water intake. Said water flow control gate (3.10) is positioned inside a hollow housing (3.11). If said water (3.9) flow is high, said gate (3.10) will be widely open, whereas if it is required to be less or zero such as at night fall, said gate (3.10) will be closed, hence impeding any water (3.9) from flowing into the system.

Said water flow control gate (3.10) is controlled by a light intensity sensor, which feeds light intensity data to a computerised controller, which in turn sends commands to an actuator which actuates said water flow control gate (3.10). Said light intensity sensor should be positioned on an outside place, preferably at the top of said tower mast structure (1.1, 3.1). The vertical pipe (3.7, 3.15) which supplies the vertically driven concentrated light rays towards the water (3.9) flow in the evaporation area (3.13), is positioned precisely on top of said evaporation area (3.13), such that said vertical pipe (3.7, 3.15) projects perpendicularly to said water driving pipe (3.12, 3.13, 3.14) at the evaporation area (3.13).

The power generation system comprised in this invention can be comprised on any type of offshore structure, such as ships, boats, pontoons, barges, or any other type of floating vessel. The system can work in exactly the same manner as previously explained when being comprised on an offshore vessel. In that case, the water (3.9) will be collected into said system by gravity from the water basin, aquifer, sea, lake or river on which said vessel is floating, and be driven by gravity to the evaporation area (3.13), where it will be converted into steam by the highly concentrated light rays which are driven down said vertical pipe (3.7, 3.15) from said lower mast structure (3.1), hence being driven into the lower mast structure (3.7), followed by being driven into said evaporation area (3.13) by the lower positioned following vertical pipe (3.15).

Said vessels can be either anchored to the bed of the sea, lake, aquifer, basing or river concerned, or can comprise rigid members which attach said vessel to the sea bed. Another option is for said vessels to comprise steel cables, which anchor and keep said vessel rigidly in its required position while floating on the sea, lake, river, basin or aquifer concerned.

So, said system can be comprised on any floating vessel. The power supply to operate the data sensors and controlling computers, electric motors and actuators is taken form the power generated by the generators, which are driven by the steam turbines, which are driven by said steam, which is supplied by the steam supply pipe (3.14), which is part of the water flow driving pipe (3.12, 3.13, 3.14).

The power generation system comprised in this invention can be comprised such that the tower mast structure (1.1, 3.1, 4.6) are comprised one beside the other (1.1, 3.1, 4.6) in a linear pattern. In this case, each mast structure (1.1, 3.1, 4.6) comprises water driving pipe (4.50 which projects under each of said mast structures (4.6), and perpendicularly to the ground surface, as well as the light driving pipes (3.7, 3.15) and the mast structure itself (1.1, 3.1, 4.6). Said water driving pipes (4.5) hence drive water (3.9) under each of said mast structures (4.6), hence driving liquid water into said pipes (4.5) towards the evaporation area (3.13), and then driving the generated steam to at least one steam turbine (4.11). Said steam turbine (4.11) in turn drives generators to generate electricity.

The rotational system's base (4.8) is comprised at the lowest position of the mast structure (4.6), but exactly all around it. Its (4.8) horizontal area supplies stability to the mast structures (4.6), as said mast structures (4.6) are loaded with all the mirrors (4.7) which are required to collect and concentrate said solar rays (1.8).

In the case of a plurality of mast structures (4.6) being positioned one beside the other (4.6) along a linear pattern, said mast structures (4.6) comprise water driving pipes (4.5) which project in parallel to each other (4.5), hence distributing the water flow into the plurality of driving pipes (4.5) comprised in said system, such that said light rays can convert simultaneously said water (3.9) into steam under all of the mast structures (4.6) which make part of said circuit. The water (3.9) is taken by gravity from a sea, river, lake, aquifer or basin into the intake pipe (4.1), and so driven downwards through the intake pipe (4.2) into a water distribution pipe (4.4). Prior of delivering said water (3.9) to said water distribution pipe (4.4), said water (3.9) drives a water turbine (4.3) with the power provided by the water's (3.9) kinetic energy while falling down said intake pipe (4.1, 4.2) due to gravity. Said generated power by said water turbine (4.3), can add power to the whole power generation output, hence maximising the power generation output and efficiency of said system.

Said water distribution pipe drives water (3.9) from said water supply pipe (4.1, 4.2) into the plurality of parallel projecting water driving pipes (4.5), which drive water under each said mast structures (4.6). After being evaporated, said steam is delivered by each of said parallel pipes (4.5) to a steam collection pipe (4.9). Said steam collection pipe (4.9) drives the steam to a steam driving pipe (4.10), which drives said steam to at least one steam turbine (4.11). After driving said steam turbine(s) (4.11), said steam is driven out of said system by a steam driving pipe (4.12). Said steam driving pipe (4.12) can condense said steam back into water by projecting through either a secondary cooling circuit (4.13), or through a water basin (4.13). Said water basin (4.13) will condense said steam by taking a large amount of heat energy into it from said pipe (4.12) due to the difference in temperature between the water situated in each of the two mentioned mediums (4.12, 4.13). Said water basin (4.13) can be the same as that from which said systems collects the water (3.9), and/or that (3.9) on which said system is floating if said power generation system is comprised on a floating vessel.

Said power generation system can also be used for water desalinisation applications. In that case, water (3.9) is taken from the sea, and driven by gravity to the evaporation area (3.13), where it (3.9) is evaporated. The salt which remains from said evaporated sea water (3.9), will be deposited on the bottom surface of said evaporation area (3.13) due to its higher density in comparison to that of water (3.9). In that case, said evaporation area (3.13) comprises a pipe which connects to the bottom surface of said evaporation area (3.13). Said pipe will collect said deposited salt by gravity and either drive it back to the sea through a salt delivering pipe, or storing it in an appropriate storage area for industry and/or consumer applications.

The power generation system comprised in this invention, comprises flat collection mirrors (1.4), which are each sustained by a horizontally projecting member (1.3). Said collection mirrors (1.4) are each positioned over a Plano concave mirror (1.7) which is positioned such that it (1.7) projects inwardly and so partly upwards towards said flat collection mirror (1.4), and partly horizontally inwards towards said tower mast structure (1.1), and so towards a Plano convex mirror (1.6), which is sustained to said mast structure (1.1) by another shorter horizontally projecting member (1.2), and which is positioned in front of the upper area of said Plano concave mirror (1.7).

Said horizontal projecting member (1.3) sustains both said Plano concave mirror (1.7), as well as said flat solar ray collection mirror (1.4). Said Plano convex mirror (1.6) is positioned under said shorter horizontally projecting member (1.2), and is sustained by the end part of said horizontal member (1.2). Said Plano convex mirror (1.6) comprises a Plano convex surface which faces partly horizontally towards said Plano concave mirror (1.7), and partly downwards towards a 45 degree inclined flat mirror (1.5). Said flat 45 degree inclined mirror (1.5) is positioned just under said Plano convex mirror (1.6).

A vertical projecting member (1.9) supports said Plano concave mirror (1.7). On top of said member (1.9), a vertically upward projecting member (1.11) sustains an outer 45 degree inclined mirror (1.10) which faces partly towards said inner 45 degree inclined mirror (1.5), and partly downwards towards the outer upper area of said Plano concave mirror (1.7). Said vertical member (1.11) also sustains said actuators (1.14) of said outer flat collection mirrors (1.13), along with said flat collection mirrors (1.13).

Said inner 45 degree flat mirrors (1.5) partly face upwards towards said Plano convex mirrors (1.6), and partly horizontally outwards towards said outer 45 degree inclined mirror (1.10), which in turn faces partly towards said inner 45 degree inclined mirror (1.5), and partly downwards towards said Plano concave mirror (1.7).

Each of the mentioned components, including Plano concave mirrors (1.7), Plano convex mirrors (1.6), inner flat solar ray collection mirrors (1.4), outer flat solar ray collection mirrors (1.13), horizontally sustaining members (1.2, 1.3), inner 45 degree inclined mirrors (1.5), and outer 45 degree inclined mirrors (1.10), are each comprised as a plurality of components, preferably a large plurality of components, such that each of said components is comprised as a large plurality. Each of said components (1.7, 1.6, 1.4, 1.13, 1.2, 1.3, 1.5, 1.10) is mounted exactly on top of each other in an orderly manner, such that one is exactly on top of the lower same type of component.

Said plurality of components should preferably be in the region of 50 to 100, 200 or 300 systems. Each of said long horizontally projecting member (1.3) comprises one of said shortest horizontally projecting members (1.2) positioned under it (1.3). So, between two long horizontal members (1.3), always one shorter sustaining horizontal member (1.2) is comprised.

This allows said design to comprise a set of a plurality of systems being mounted one on top of each other along a tower mast structure (1.1), such that all of said systems are distributed along said tower mast's height (1.1). This allows said power generation system to comprise an entire solar ray concentration architecture, which hence concentrates the solar rays (1.8) as required into a highly concentrated light beam.

In that case, the solar rays (1.8) are collected by either the outer collection mirrors (1.13) which reflect said rays on said inner collection mirrors (1.4), or said inner collection mirrors (1.4) directly collecting the solar rays (1.8) if these (1.8) project at angles of 45 degrees or less in comparison to the ground or basement plane's level. The light rays (1.8) are reflected by said inner collection mirrors (1.4) vertically downwards onto the Plano concave surfaces of said Plano concave mirrors (1.7). Said Plano concave mirrors (1.7) then concentrate said solar rays (1.8) into a concentrated light ray, and so towards said inner Plano convex mirrors (1.6). Said Plano convex mirrors reflect said light rays vertically downwards to said inner 45 degree inclined flat mirror (1.5), which reflect said rays to said outer 45 degree inclined flat mirrors (1.10), which reflect said concentred light rays vertically downwards to the surface of the lower position Plano concave mirrors (1.7). Said concentrated light rays are reflected back to the lower positioned Piano convex mirrors (1.6), along with the collected light rays (1.8) which were collected by said lower positioned collection mirrors (1.4, 1.13). And so, said process is repeated in a plurality of times, preferably a large plurality of times until said super concentrated light rays reach the bottom of said mast structure (1.1, 3.1).

After that, said light rays are concentrated into said lower mast structure (3.1) by a lower concave mirror (3.3), and then reflected vertically downwards again by a convex mirror (3.2). So, said light rays are vertically driven downwards into a hollow pipe (3.7) which is embedded inside said lower mats structure (3.1). Said light rays follow the same direction of projection into a vertical pipe (3.15) which is positioned under said mast structure (1.1, 3.1), straight into said evaporation area (3.13) of said water flow driving pipe (3.12, 3.13, 3.14). Said water flow (3.9) which passes through said evaporation area (3.13), is instantly evaporated, and so converted into steam. Said steam drives steam turbines (4.11), which in turn drive generators to generate electricity.

Each of said horizontal supporting members (1.2, 1.3) comprises a double member geometry, such that these (1.2, 1.3) project along the two lateral side of said mirrors (1.5, 1.6, 1.4, 1.7). This design is comprised in order for the light rays to be driven between said mirrors (1.5, 1.6, 1.4, 1.7), and downwards towards the bottom structure (3.1) of said tower mast structure (1.1,3.1).

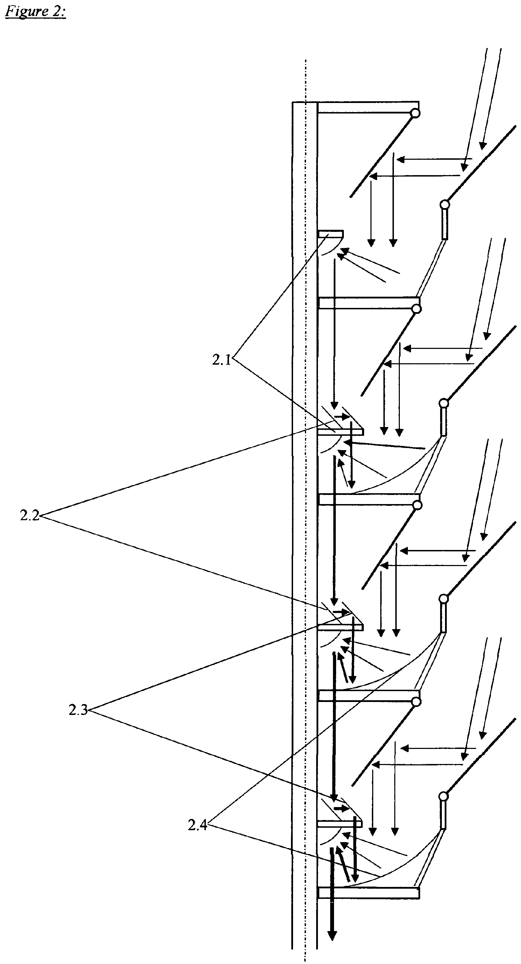

The surfaces of said 45 degree inclined mirrors (1.5, 1.10) are exactly parallel to each other, such that said light rays can be reflected accurately. The surfaces of all mirrors (1.5, 1.6, 1.4, 1.7) are positioned perpendicularly to the side view comprised on Figures 1 and 2.

The power generation system comprised in this invention can also be comprised on space vehicles, including satellites, space stations, and spacecraft. The tower mast structure (1.1) can be attached to one of said space vehicle structures, such that it (1.1) can be oriented such that the collection mirrors (1.4, 1.13) are positioned such that these (1.4, 1.13) will collect and reflect the incoming solar rays (1.8) to the concave mirror structures (1.7). The orientation will be performed such that the surfaces of said collection mirrors (1.4, 1.13) are always positioned constantly perpendicularly to the incoming solar rays (1.8). Said orientation will be performed according to said space structure's attitude and orientation to said solar rays (1.8). In this way, said power generation system can supply a large amount of power to a space structure, while using a cheaper system than ultra-sensitive photovoltaic cells, and which is not easily damaged by moving cosmic objects, in addition of not losing the accuracy of the solar collection efficiency over the years of usage while said system is in operation.

The power generation system design comprised in this invention can be comprised on vessels such as boats, barrages, pontoons or ships which are positioned offshore on rivers, lakes, seas, canals or water basins as previously mentioned. However, said system can not only generate power for supply to offshore applications, but can also supply power to other offshore vessels, or to the same vessel on which said system is positioned. This means that said power generation system, when being positioned or installed on board any type of vessel, can be used to supply power to the same vessel. Said power can be used for industrial applications, fishing, lighting, and propulsion applications, as well as to power the navigational instruments of said vessels. This means that comprising said power generation system on board a vessel can offer loads of advantages, not only for the offshore vessels or onshore buildings or installation nearby, but also to offer its own naturally fuelled propulsion system, which will be completely fuel less and emission less. Said vessel would therefore comprise its own energy to supply its entire propulsion and electricity utilisation needs.

Said power generation system can use synthetic oils, molten salt, or pressurised steam, which would flow through a pipe (3.13, 4.5) under the concentrated light rays (1.12) at the lower part of said tower mast structure (3.1). Said design can be comprised on said power generation system comprised in this invention, whether comprised onshore, or offshore on a vessel, such as a ship, a barge, a boat, or a pontoon. In the case of the power generation system concerned using synthetic oil, molten salt or pressurised steam as a heat collection source from said concentrated light rays (1.12), a storage area for said synthetic oil, molten salt or pressurised steam is comprised, where said fluid can be stored, hence storing the heat transferred from said light rays (1.12) at a very high efficiency. Said storage tank connects to a steam generator, where a pump can drive said synthetic oil, molten salt or compressed steam to a steam generator, where it will generate steam, which will in turn drive a steam turbine, which will in turn drive a generator for the generation of electricity. If said steam turbine is not used, said storage tank can store the heat for a time period of a plurality of hours. With this design, offshore vessels could comprise the required energy to meet its electricity demand during both day and night periods.

Said storage system comprises a storage tank, which connects via a circuit to a pipe (3.13, 4.5) which projects perpendicularly to said tower mast structure's (1.1, 3.1, 4.6) vertical direction of projection, and projects as a pipe (3.13, 4.5) under said vertically projecting concentrated solar rays (1.12) under said mast structure (1.1, 3.1, 4.6). A pump situated into said pipe drives a fluid such as synthetic oil, molten salt or pressurised steam, through said pipe and under said concentrated light rays (1.12) prior of being driven back to said storage tank via a separate pipe, hence forming a circuit. Said storage tank stores the superheated fluid, and hence stores the heat transferred by said solar light rays (1.12) inside said tank. Another circuit comprises a pump which is used to drive said superheated synthetic oil, molten salt or compressed steam through a steam generator, where said heat is transferred to liquid water, which is instantly converted into steam. Said liquid water flows through a separate tertiary circuit.

Said molten salt, synthetic oil or pressurised steam circuit, drives said fluid back to said storage tank by the means of a pump after being driven through said steam generator. Said cooled fluid is then driven back again under said tower mast structure (1.1, 3.1, 4.6), and hence under said concentrated light rays (1.12) in order to collect heat again. Said fluid flows as a superheated fluid back to said storage tank again. Said process is repeated over and over again during the operation of said system.

Said tertiary circuit drives liquid water by the means of a pump which is positioned along said tertiary circuit's pipe. Said tertiary circuit's pipe drives liquid water by the means of a pump which is comprised through said pipe. Said pipe therefore drives said water through said steam generator, where it collects the heat supplied by the superheated synthetic oil, molten salt or compressed steam. Said water is therefore instantly converted to steam when flowing through said steam generator. Said steam is then driven through the follow up section of said pipe to a steam turbine, where said steam converts its heat energy into kinetic energy. Said steam turbine drives a generator, which generates electricity with the kinetic energy of the steam, hence shaping a fully renewable and emissions free system, which relies solely on solar power for the entire generation of electricity.

Said steam generator functions as a heat exchanger, where said synesthetic oil, compressed steam or molten salt, transfers the heat to a flow of liquid water, which is converted into steam when collecting said heat from said other fluid. Both fluids are driven through separate pipes, which make two entirely separate circuits.

The storage tank can be used to supply heat energy to the water pipe during the night, where no solar rays are present, hence offering a continuous time period of supply of steam to the steam turbine, whether it is at night or during daytime. This design will therefore guarantee a constant electricity supply during both day and night, hence meeting the demand of said onshore or offshore vessel, or of said industrial installations, towns, or railways. Said steam turbine will therefore constantly drive said generators to constantly generate electricity during both daytime and night-time periods.

The water (3.9) flowing through said tertiary circuit can be collected from the sea, lake, river, canal, or water basin on which said vessel floats on if said power generation system is comprised offshore on an offshore vessel. Said water (3.9) can be the same as that on which said vessel is comprised, or that on which said vessel floats. If said vessel is comprised floating on salty water, such as sea water, said slat con be collected via a septate pipe situated in the evaporation area (3.13) under said tower mast structure (1.1, 3.1, 4.6), or at the bottom of said steam generator's vessel. Said salt can then be driven to a storage area, where it can be collected for use in industry, food, or any other convenient applications.

Said water can flow via gravity down said tertiary circuit's pipe, into which a water flow control gate can also be comprised. A condenser can be comprised to convert said steam back into water again after the heat transferring process and the driving of the steam turbine, a process which occurs prior of driving said water back to said steam generator. When said water transfers the heat from said fluid such as synthetic oil, compressed steam or molten salt and then drives said steam turbine, said steam can be condensed into said condenser, and be driven back to said steam generator, hence fully completing said tertiary circuit's loop.

Said primary circuit is used to drive synthetic oil, compressed steam or molten salt, and can be comprised in a circuit comprising a plurality of pipes (4.5) which are each positioned in parallel to each other (4.5), such that each of said pipes (4.5) projects under one tower mast structure (1.1, 3.1, 4.6), hence collecting the heat from said concentrated solar rays (1.12). Said circuit would comprise a fluid distribution pipe (4.4) and a fluid collection pipe (4.9), such that said fluid is distributed between all tower mast structures (1.1, 3.1, 4.6), but also in which the number of pipes is minimised, hence minimising construction and maintenance costs.

The tower mast structure (1.1, 3.1, 4.6) of said power generation system rotates on a plane which is parallel to the ground level on which the mast structure (1.1, 3.1, 4.6) of said power generation system is standing, and about an axis (1.15, 3.16) which is comprised along the centre of the cross-sectional area of said mast beam structure (1.1, 3.1, 4.6). This system is electronically actuated by an electric motor, and is controlled by a computer, in which the position of the sun in the horizon is programmed for each minute and each day for a length of at least one year. A solar clock which supplies solar position data at all times, can also be comprised in said computer. The advantage of said design is that only one actuator is required to orientate said solar ray mirrors (1.4, 1.13) opposite to the incoming solar rays (1.8). The rotational system also comprises a circular base (3.4, 4.8) at the bottom of said tower mast structure (1.1, 3.1, 4.6). Said base (3.4, 4.8) offers stability to said tower mast structure (1.1, 3.1,4.6).

Said tower mast structure (1.1, 3.1, 4.6) can also be housed inside a transparent building which surrounds the entire tower mast structure (1.1, 3.1, 4.6) from top to bottom. This design would impede any side movements of said tower mast structure (1.1, 3.1, 4.6) due to high winds, hence guaranteeing the high accuracy of concentration of said solar rays at all times, even at times of strong winds or strong wind gales. The materials of said transparent housing can be transparent glass, transparent tempered glass, transparent Plexiglas, or transparent PVC plastic. Said building can house one mast structure (1.1, 3.1, 4.6) inside it, or a plurality of said mast structures (1.1, 3.1, 4.6), preferably if these (1.1, 3.1, 4.6) are positioned one beside the other (1.1, 3.1, 4.6), forming a linear pattern.

## Claims

1. A solar ray concentration system comprising a vertically projecting mast structure (1.1) which comprises a plurality of systems which are mounted one on top of the other down said mast structure (1.1) from top to bottom, and in which each of said systems comprises a flat collection mirror (1.4), a Plano concave mirror (1.7), a Plano convex mirror (1.6), an inner 45 degree inclined flat mirror (1.5), and an outer 45 degree inclined flat mirror (1.10), wherein said flat collection mirror (1.4) of each system is sustained by two parallel horizontally projecting members (1.3) which sustain the Plano concave mirror (1.7) of the system positioned on top of the system concerned, wherein the Plano concave mirror (1.7) faces towards the mast structure (1.1) and is positioned below said flat collection mirror (1.4), and concentrates the solar rays (1.8) deflected by the flat collection mirror (1.4) towards the Plano convex mirror (1.6) which faces opposite to said mast structure (1.1), and which hence faces towards said Plano concave mirror (1.7), the Piano convex mirror (1.6) being positioned in front of and slightly above of said Plano concave mirror (1.7), and nearer to said vertical mast structure (1.1) than said Plano concave mirror (1.7), the inner 45 degree inclined flat mirror (1.5) is positioned below the upper system's Piano convex mirror (1.6) and partly faces upwards towards said Plano convex mirror (1.6) and partly horizontally away from said mast structure (1.1) and so towards the outer 45 degree inclined flat mirror (1.10), which is positioned horizontally in front of said inner 45 degree inclined flat mirror (1.5) and partly faces towards the mast structure (1.1) and so towards the inner 45 degree inclined mirror (1.5), and partly faces downwards towards the Plano concave mirror (1.7) of the lower system, which is positioned below said outer 45 degree inclined flat mirror (1.10), as well as below the whole surface of said lower system's flat collection mirror (1.4).

2. A solar ray concentration system according to Claim 1 in which the inner 45 degree inclined flat mirror (1.5) of each system and the Plano convex mirror (1.6) of the lower system, are both sustained by a common horizontally projecting member (1.2), and are hence both (1.5, 1.6) mounted on top of each other, with the inner 45 degree inclined flat mirror (1.5) being mounted on top of the Plano convex mirror (1.6) of the lower system, such that said horizontally projecting member (1.2) sustains both the inner 45 degree inclined flat mirror (1.5) and the Plano convex mirror (1.6) and is positioned between the two (1.5, 1.6).

3. A solar ray concertation system according to Claims 1 to 2 in which the Plano concave mirrors (1.7) are each supported by a vertically projecting member (1.9), sustained by the two parallel horizontally projecting members (1.3) on which said Plano concave mirrors (1.7) are attached to, such that said horizontally projecting members (1.3) also sustain the lower system's flat collection mirror (1.4).

4. A solar ray concentration system according to Claims 1 to 3 in which the outer 45 degree inclined flat mirror (1.10) is sustained by a vertically projecting member (1.11) which attaches to the Plano concave mirror (1.7) positioned below it.

5. A solar ray concentration system (1.1) according to Claims 1 to 4 which comprises an outer flat collection mirror (1.13) positioned outwards and sustained by an electric motor actuated rotational system (1.14) which connects to the bottom of said outer flat collection mirror (1.13), the electric motor actuated rotation system (1.14) connects to a vertically projecting member (1.11) which connects to the two parallel horizontally projecting members (1.3) of the lower systems, such that said outer flat collection mirror (1.13) is positioned in front of each of said system's flat collection mirror (1.4) which is sustained by an electric motor actuated rotary system (1.16) at the top end of said flat collection mirror (1.4) and which is sustained by the two top positioned parallel horizontally projecting members (1.3) positioned at each side, such that said outer flat collection mirror (1.13) is constantly oriented to reflect the solar rays (1.8) towards a horizontal direction towards the vertical mast structure (1.1), such that if the solar rays (1.8) project at angles higher than 45 degrees to the ground, said outer flat collection mirror (1.13) reflects said solar rays (1.8) to the flat collection mirror (1.4), which is inclined at 45 degrees in order to reflect these at 45 degrees vertically downwards.

6. A solar ray concentration system according to Claim 5 in which the surface of said outer flat collection mirrors (1.13) is oriented at an angle which is exactly perpendicular to the angle of projection of the solar rays (1.8) to the ground, such that said rays are projected to the flat collection mirrors (1.4) which reflect said solar rays (1.8) directly vertically downwards, all this being controlled by the computerised control unit which controls the electric motor actuated rotational systems (1.14) when the solar rays (1.8) project at an angle of 45 degrees or lower to the ground, such that said outer flat collection mirrors (1.13) and its vertically projecting members (1.11) and rotational systems (1.14) are positioned on top of each other, each at the same distance from each other and from the mast structure (1.1) which sustains the systems.

7. A solar ray concentration system according to Claims 5 to 6 in which said flat collection mirror (1.4) is constantly inclined at an angle of 45 degrees, facing partly horizontally away from the mast structure (1.1) and partly vertically downwards when said outer flat collection mirror (1.13) initially reflects the incoming solar rays (1.8) towards said inner flat collection mirror (1.4), such that said outer collection mirror (1.13) is positioned at a greater horizontal distance from the mast structure (1.1) than the flat collection mirror (1.4), such that said outer collection mirror (1.13) comprises a vertical length component which spans to two parallel horizontally projecting members (1.3) when said outer flat collection mirror (1.13) is tilted at its highest inclination angle compared to the ground level.

8. A solar ray concentration system according to Claims 1 to 7 which comprises a concave mirror (3.3) which is positioned at the lower part (3.1) of said mast structure (1.1), such that said concave mirror (3.3) is positioned under the lowest positioned Plano convex mirror (1.6) along said mast structure (1.1), hence being positioned just under the concentrated light rays (1.12), such that said light rays (1.12) are reflected and concentrated approximately horizontally towards said mast structure (1.1), and so towards a convex mirror (3.2) which is embedded inside said lower part (3.1) of said mast structure (1.1), such that said light rays (1.12) access the convex mirror (3.2) through a hollow opening situated between said concave (3.3) and said convex (3.2) mirrors, such that said convex mirror (3.2) reflects said concentrated light rays (1.12) back vertically downwards into a hollow vertically projecting pipe (3.7) or channel (3.7), which is embedded inside said lower part (3.1) of said mast structure (1.1), followed by a vertical pipe or channel (3.15), which continues to drive said concentrated light rays (1.12) into the ground or basement on which said mast structure (1.1) is positioned, such that said convex mirror (3.2) faces partly downwards and partly towards said concave mirror (3.3), while said concave mirror (3.3) faces partly upwards towards said lowest positioned Plano convex mirror (1.6), and partly towards said convex mirror (3.2).

9. A solar ray concentration system according to Claims 1 to 8 which comprises a rotational system (3.4, 4.8) which is actuated by an electric motorised system, which rotates said mast structure (1.1, 4.6) about an axis (1.15, 3.16) which is positioned along the middle of said mast structure's (1.1, 4.6) cross-section, such that said axis (1.15, 3.16) always projects along the direction of projection of said mast structure (1.1, 4.6), such that said electric motorised system is located under the rotational system (3.4, 4.8), which is positioned at the bottom of said mast structure (1.1, 4.6), such that said flat collection mirrors (1.4) and outer flat collection mirrors (1.13) will always be positioned opposite to the incoming solar rays (1.8), wherein a power generation system comprises a hydroelectric turbine (4.3) which converts the kinetic energy of gravity driven water (3.9) into electricity prior to passing under said mast structure (1.1, 4.6), in which water is converted into steam, and driven to a steam turbine(s) (4.11), which drives generators to generate electricity.

10. A solar ray concentration system according to Claims 1 to 9 used on floating vessels, including ships, barges, boats, pontoons and floating docks, such that said vertically projecting mast structure (1.1) is used floating on a sea, lake, river, water basin or canal, such that said floating vessel on which said vertically projecting mast structure (1.1) is used, collects water (3.9) by gravity from the water (3.9) on which said vessel floats, and said water (3.9) is driven by gravity by means of a water intake (3.12) positioned under the water surface, such that said water (3.9) flows towards an evaporation area (3.13), in which said water (3.9) is converted into steam to drive steam turbines (4.11) which in turn drive generators, such that said vessels can be moored to the bed of said sea, river, canal or water basin by rigid steel cables which connect said bed to the lower surface of said vessel.

11. A solar ray concentration system according to Claims 1 to 10 comprising a plurality of said mast structures (1.1, 4.6) one beside the other (4.6) along a linear pattern, under which a water driving pipe (4.5) projects across an evaporation area (3.13) under each mast structure (1.1, 4.6), such that an intake pipe (3.12, 4.1, 4.2) connects to a water distribution pipe (4.4), which distributes water (3.9) into a plurality of water driving pipes (4.5), such that water flows under each mast structure (1.1, 4.6) and is converted into steam, which is driven along each of said water driving pipes (4.5) to a steam collection pipe (4.9) which connects to all water driving pipes (4.5) altogether, and which drives said steam to a steam driving pipe (4.10) which drives said steam to at least one steam turbine (4.11), which in turn drives generators to generate electricity, such that a water flow control gate (3.10) is located at the intake of said intake pipe (3.12, 4.1, 4.2), which is positioned into the upper surface of said intake pipe (3.12, 4.1, 4.2), and is controlled by a computerised controller, which controls the actuation of said water flow control gate (3.10) according to the data supplied by a light intensity sensor, which is positioned at a high point at the outside, preferably on top of said mast structure (1.1, 4.6).

12. A solar ray concentration system according to Claims 10 to 11 which is used for desalination applications, hence comprising a salt exit pipe along the bottom of said evaporation area (3.13), such that said vertically projecting mast structure (1.1) can also be used for the isolation of hydrogen and oxygen at the evaporation area (3.13) from said water (3.9), given that the temperatures and pressures present are high enough, such that an oxygen collection pipe and a hydrogen collection pipe are comprised at the evaporation area (3.13), with each pipe comprising a membrane to collect only oxygen or hydrogen, such that each of said pipes supplies oxygen and/or hydrogen separately to storage areas and/or to industry, as well as supplying hydrogen as a fuel to harbours, ports, airports, petrol stations and rail stations, for use as fuel for aerospace propulsion, road vehicle propulsion, railway propulsion, and/or offshore vessel propulsion.

13. A solar ray concentration system according to Claims 1 to 12 which supplies power and/or supplies heat and/or supplies water and/or is used in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, and dockyards.

## Patentansprüche

1. Ein Sonnenstrahl-Konzentrationssystem mit einer vertikal vorspringenden Maststruktur (1.1), die eine Vielzahl von Systemen umfasst, die auf der Mastkonstruktion (1.1) von oben nach unten übereinander montiert sind, wobei jedes System einen flachen Sammlungsspiegel (1.4), einen Plano-Konkavspiegel (1.7), einen Plano-Konvexspiegel (1.6), einen inneren um 45 Grad geneigten flachen Spiegel (1.5) und einen äußeren um 45 Grad geneigten Flachspiegel (1.10) umfasst, wobei der flache Kollectorspiegel (1.4) jedes Systems von zwei parallelen, horizontal vorspringenden Elementen (1.3) gestützt wird, die den Plano-Hohlspiegel (1.7) des Systems stützen, der auf dem betreffenden System angeordnet ist, wobei der Plano-Hohlspiegel (1.7) in Richtung der Maststruktur (1.1) zugewandt ist und unterhalb des flachen Kollektorspiegels (1.4) angeordnet ist und die Sonnenstrahlen (1.8) konzentrieren, die durch den flachen Kollektorspiegel (1.4) auf den konvexen Plano-Spiegel (1.6) abgelenkt werden, der der Maststruktur gegenüberliegt (1.1) und daher dem Plano-Konkavspiegel (1.7) zugewandt ist, wobei der Plano-Konvexspiegel (1.6) vor und etwas oberhalb des Plano-Konkavspiegels (1.7) und näher an der vertikalen Maststruktur (1.1) als der Plano-Konkav Spiegel (1.7) angeordnet ist, worin der innere um 45 Grad geneigte flache Spiegel (1.5) unter dem Plano-Konvexspiegel (1.6) des oberen Systems angeordnet ist und teilweise nach oben in Richtung auf den Plano-Konvexspiegel (1.6) und teilweise horizontal von der Maststruktur (1.1) weg und somit in Richtung des äußeren 45 Grad geneigten flachen Spiegels (1.10) zeigt, der horizontal vor dem inneren 45 Grad geneigten flachen Spiegel (1.5) angeordnet ist und teilweise zur Maststruktur (1.1) und somit zum inneren 45 Grad geneigten Spiegel zugewandt ist (1.5) und teilweise nach unten in Richtung des planokonkaven Spiegels (1.7) des unteren Systems zeigt, der unter dem äußeren um 45 Grad geneigten flachen Spiegel (1.10) sowie unter der gesamten Oberfläche der flachen Sammlung Spiegel (1.4) des unteren Systems angeordnet ist.

2. Ein Sonnenstrahl-Konzentrationssystem nach Anspruch 1, bei dem der innere um 45 Grad geneigte flache Spiegel (1.5) jedes Systems und der Plano-Konvexspiegel (1.6) des unteren Systems von einem gemeinsamen horizontal vorspringenden Element (1.2) gestützt werden und sind daher beide (1,5, 1,6) übereinander montiert, wobei der innere um 45 Grad geneigte flache Spiegel (1.5) auf dem plano konvexen Spiegel (1.6) des unteren Systems derart angebracht ist, dass das vorgenannte Element (1.2) sowohl den inneren um 45 Grad geneigten flachen Spiegel (1.5) als auch den Plano-Konvexspiegel (1.6) tragt und zwischen den beiden (1.5, 1.6) angeordnet ist.

3. Ein Sonnenstrahl-Konzertierungssystem nach den Ansprüchen 1 bis 2, bei dem die Plano-Konkavspiegel (1.7) jeweils von einem vertikal vorstehenden Element (1.9) getragen werden, das von zwei parallelen horizontal vorstehenden Elementen (1.3) getragen wird, auf denen Plano-Konkavspiegel angeordnet (1.7) sind, so dass die horizontal vorstehenden Elemente (1.3) auch den flachen Sammlungsspiegel (1.4) des unteren Systems stützen.

4. Ein Sonnenstrahl-Konzentrationssystem nach den Ansprüchen 1 bis 3, bei dem der äußere um 45 Grad geneigte flache Spiegel (1.10) von einem vertikal vorstehenden Element (1.11) gehalten wird, das an dem darunterliegenden Plano-Hohlspiegel (1.7) befestigt ist.

5. Ein Sonnenstrahl-Konzentrationssystem (1.1) nach den Ansprüchen 1 bis 4, das einen äußeren Flachkollektorspiegel (1.13) aufweist, der nach außen positioniert ist und von einem elektromotorisch betätigten Rotationssystem (1.14) gehalten wird, das mit der Unterseite der Äußeren Flach Kollektorspiegel verbunden ist (1.13), wobei das elektromotorisch betätigte Rotationssystem (1.14) mit einem vertikal vorstehenden Element (1.11) verbunden ist, das mit den zwei parallelen horizontal vorstehenden Elementen (1.3) der unteren Systeme verbunden ist, so dass der äußere Flachkollektorspiegel (1.13) vor jedem Flachkollektorspiegel des Systems (1.4) angeordnet ist, der von einem elektromotorisch betätigten Drehsystem (1.16) am oberen Ende des flachen Sammlungsspiegels (1.4) gestützt wird und das von den beiden oberen parallele, horizontal vorstehende Elemente (1.3) gehalten wird, die an jeder Seite angeordnet sind, so dass der äußere flache Kollektorspiegel (1.13) stets um die Sonnenstrahlen (1.8) in einer horizontalen Richtung zu der vertikalen Maststruktur (1.1) ausgerichtet ist, so dass, wenn die Sonnenstrahlen (1.8) unter Winkeln hoher als 45 Grad zum Boden kommen, der äußere flache Kollektorspiegel (1.13) die Sonnenstrahlen (1.8) zum flachen Kollektorspiegel (1.4) reflektiert, der um 45 Grad geneigt ist, um diese um 45 Grad senkrecht nach unten zu reflektieren.

6. Ein Sonnenstrahl-Konzentrationssystem nach Anspruch 5, bei dem die Oberfläche der äußeren flachen Kollektorspiegel (1.13) unter einem Winkel ausgerichtet ist, der genau senkrecht zum Projektionswinkel der Sonnenstrahlen (1.8) zum Boden ist, so dass die Strahlen auf die flachen Kollektorspiegel (1.4) projiziert werden, die die Sonnenstrahlen (1.8) direkt senkrecht nach unten reflektieren, wobei dies alles von der computergesteuerten Steuereinheit gesteuert wird, die die Elektromotordrehsysteme (1.14) steuert, so dass wenn die Sonnenstrahlen (1.8) in einem Winkel von 45 Grad oder weniger zum Boden vorstehen, die äußeren flachen Kollektorspiegel (1.13) und ihre vertikal vorstehenden Elemente (1.11) und ihre Rotationssysteme (1.14) jeweils übereinander mitgleichem Abstand voneinander und von der Maststruktur (1.1) angeordnet sind, die die Systeme stützt.

7. Ein Sonnenstrahl-Konzentrationssystem nach den Ansprüchen 5 bis 6, bei dem der flache Kollektorspiegel (1.4) stets in einem Winkel von 45 Grad geneigt ist, wobei dieser teilweise horizontal von der Maststruktur (1.1) weg und teilweise senkrecht nach unten gerichtet ist, wobei der flache Kollektorspiegel (1.13) zunächst die einfallenden Sonnenstrahlen (1.8) in Richtung des inneren flachen Kollektorspiegels (1.4) reflektiert, so dass der äußere Kollektorspiegel (1.13) in einem größeren horizontalen Abstand von der Maststruktur (1.1) als der flacher Kollektorspiegel (1.4) angeordnet ist, derart, dass der äußere Kollektorspiegel (1.13) eine vertikale Längskomponente umfasst, die sich zu zwei parallelen, horizontal vorstehenden Elementen (1.3) erstreckt, wenn der äußere flache Sammelspiegel (1.13) im Vergleich zu seinem höchsten Neigungswinkel zur Bodenhohe geneigt ist.

8. Ein Sonnenstrahl-Konzentrationssystem nach den Ansprüchen 1 bis 7, das einen konkaven Spiegel (3.3) aufweist, der am unteren Teil (3.1) der Maststruktur (1.1) angeordnet ist, so dass der konkave Spiegel (3.3) unter der unterste positionierte Plano-Konvexspiegel (1.6) entlang der Maststruktur (1.1) angeordnet ist, also unmittelbar unter den konzentrierten Lichtstrahlen (1.12) angeordnet ist, so dass die Lichtstrahlen (1.12) reflektiert und etwa horizontal in Richtung auf die Maststruktur (1.1.) konzentriert werden und so zu einem konvexen Spiegel (3.2), der innerhalb des unteren Teils (3.1) der Maststruktur (1.1) eingebettet ist, derart, dass die Lichtstrahlen (1.12) durch eine zwischen den konkaven (3.3) und den konvexen (3.2) Spiegel liegende hohle Öffnung den konvexen Spiegel (3.2) erreichen, so dass der konvexe Spiegel (3.2) die konzentrierten Lichtstrahlen (1.12) vertikal nach unten in ein hohles vertikal vorspringendes Rohr (3.7) oder Kanal (3.7) zurückreflektiert, der innerhalb des unteren Teils (3.1) eingebettet ist, wobei die Maststruktur (1.1) gefolgt von einem vertikalen Rohr oder Kanal (3.15), das die konzentrierten Lichtstrahlen (1.12) weiterhin in den Boden oder Untergrund leitet, auf dem die Maststruktur (1.1) positioniert ist, so dass der konvexe Spiegel (3.2) teilweise nach unten und teilweise in Richtung des konkaven Spiegels (3.3) zeigt, während der konkave Spiegel (3.3) teilweise nach oben in Richtung des untersten positionierten plano-konvexen Spiegels (1.6) und teilweise in Richtung des konvexen Spiegels (3.2) zeigt.

9. Ein Sonnenstrahl-Konzentrationssystem nach den Ansprüchen 1 bis 8, das ein Rotationssystem (3.4, 4.8) umfasst, das von einem elektromotorischen System betätigt wird, das die Maststruktur (1.1, 4.6) um eine Achse (1.15, 3.16) dreht, die entlang der Mitte des Querschnitts der Maststruktur (1.1, 4.6) eingeordnet ist, so dass die Achse (1.15, 3.16) immer entlang der Projektionsrichtung der Maststruktur (1.1, 4.6) vorsteht, so dass die elektrische Motorisierung sich unter dem Rotationssystem (3.4, 4.8) befindet, das an der Unterseite der Maststruktur (1.1, 4.6) angeordnet ist, so dass die flachen Kollektorspiegel (1.4) und die äußeren flachen Kollektorspiegel (1.13) stets entgegengesetzt zu den einfallenden Sonnenstrahlen (1.8) angeordnet werden, wobei ein Stromerzeugungssystem eine hydroelektrische Turbine (4.3) umfasst, die die kinetische Energie des durch Schwerkraft angetriebenen Wassers (3.9) in Elektrizität umwandelt, bevor sie unter die Maststruktur (1.1, 4.6) gelangt, worin Wasser in zu Dampf umgewandelt wird und zu einer Dampfturbine (4.11) geleitet wird, die Generatoren antreibt, um Strom zu erzeugen.

10. Ein Sonnenstrahl-Konzentrationssystem nach den Ansprüchen 1 bis 9, das auf schwimmenden Wasserfahrzeuge verwendet wird, einschließlich Schiffen, Lastkähnen, Booten, Pontons und Schwimmdocks, so dass die vertikal abstehende Maststruktur (1.1) auf einem Meer, einem See, einem Fluss, einem Wasserbecken order einnen Kanal schwimmend verwendet wird, so dass das schwimmende Wasserfahrzeug, an dem die vertikal projezierende Maststruktur (1.1) angebracht wird, wobei Wasser (3.9) durch Schwerkraft aus dem Wasser (3.9), auf dem das Schiff schwimmt, sammelt und dieses Wasser (3.9) durch Schwerkraft mittels eines Wassereinlasses (3.12), der unter der Wasseroberfläche angeordnet ist, derart getrieben wird, dass das Wasser (3.9) zu einem Verdampfungsbereich (3.13) strömt, in dem das Wasser (3.9) in Dampf umgewandelt wird, um Dampfturbinen (4.11) anzutreiben, die wiederum Generatoren antreiben, so dass die Wasserfahrzeuge an dem Bett des See-, Fluss-, Kanal- oder Wasserbeckens durch starre Stahlseile festgemacht werden können, die das Bett mit der unteren Oberfläche des Wasserfahrzeuge verbinden.

11. Ein Sonnenstrahl-Konzentrationssystem nach den Ansprüchen 1 bis 10, umfassend eine Vielzahl der Maststrukturen (1.1, 4.6) nebeneinander (4.6) entlang eine linearen Anordnung, unter der ein Wasserleitrohr (4.5) durch eine Verdampfungsbereich (3.13) unter jeder Maststruktur (1.1, 4.6) ragt, so dass ein Einlassrohr (3.12, 4.1, 4.2) mit einem Wasserverteilungsrohr (4.4) verbunden ist, das Wasser (3.9) in mehrere Wasserführungsrohre (4.5) verteilt, so dass Wasser unter jeder Maststruktur (1.1, 4.6) fließt und in Dampf umgewandelt wird, der entlang jeder der Wasserleitungen (4.5) zu einer Dampfsammelleitung (4.9) geführt wird, die alle Wasserleitungen verbindet (4.5), und die den Dampf zu einem Dampfantriebsrohr (4.10) antreibt, das den Dampf zu mindestens einer Dampfturbine (4.11) leitet, die wiederum Generatoren zur Erzeugung von Elektrizität antreibt, wobei ein Wasserströmungssteuerschiebers (3.10) sich am Einlass des Einlassrohrs (3.12, 4.1, 4.2) befindet, das auf die Oberfläche des Einlassrohrs (3.12, 4.1, 4.2) eingesetzt wird und von einer computergesteuerten Steuerung gesteuert wird, die die Betätigung des Wasserströmungssteuerschiebers (3.10) gemäß den von einem Lichtintensitätssensor gelieferten Daten steuert ist an einer hohen Stelle außen angeordnet, vorzugsweise auf dem Gipfel der Maststruktur (1.1, 4.6).

12. Ein Sonnenstrahl-Konzentrationssystem nach den Ansprüchen 10 bis 11, das für Entsalzungsanwendungen verwendet wird, wobei ein Salzauslassrohr entlang des Bodens des Verdampfungsbereichs (3.13) umfasst, so dass die vertikal projezierende Maststruktur (1.1) auch für die Isolierung von Wasserstoff und Sauerstoff im Verdampfungsbereich (3.13) aus dem Wasser (3.9) verwendet werden kann, vorausgesetzt, dass die vorhandenen Temperaturen und Drücke hoch genug sind, so dass ein Sauerstoffsammelrohr und ein Wasserstoffsammelrohr im Verdampfungsbereich enthalten sind (3.13), wobei jedes Rohr eine Membran zum Sammeln von Sauerstoff oder Wasserstoff aufweist, derart, dass jedes der Rohre Sauerstoff und / oder Wasserstoff getrennt zu Lagerbereichen und / oder zur Industrie sowie Wasserstoff als Brennstoff zu Häfen, Flughäfen, Tankstellen und Bahnhöfen zur Verwendung als Kraftstoff für Luft- und Raumfahrtantrieb, Straßenfahrzeugantrieb, Eisenbahnantrieb und / oder Offshore-Schiffsantrieb liefert.

13. Ein Sonnenstrahl-Konzentrationssystem nach den Ansprüchen 1 bis 12, das Energie liefert und / oder Wärme liefert und / oder Wasser liefert und / oder in Berggebieten, Höhenlagen, Orten in geringer Höhe, Seeufern, Meeresufem, Seen, Flüsse, Flussufer, Meere, Kanäle, Kanäle, Kanalufer, Kanalufer, Schiffe, Boote, U-Boote, Züge, Lastwagen, Lastwagen, Anhänger, Flugzeuge, Luftkissen-Bodeneffektfahrzeuge, Bodeneffektfahrzeuge, Seefahrzeuge, Marinefahrzeuge, Hubschrauber, Flugzeuge, Raumflugzeuge, Raumfahrzeuge, Satelliten, Raumstationen, Gebäude, Häuser, Fabriken, Fabrikgebäude, Telekommunikationstürme, Kommunikationstürme, Flughäfen, Flughafenkontrolltürme, Krankenhäuser, Hochhäuser, Steinbrüche, Minen, Häfen, Kräne, Kraftwerke, Kühltürme, Antennen, ozeanographische Schiffe, Eisbrecher, Offshore-Schiffe, Offshore-Schiffe für Windkraftanlagen, Öltanker, Containerschiffe, Offshore-Schiffe für die Erzeugung von Solarthermie, Generatoren für thermische Energie Offshore-Schiffe, Offshore-Schiffe, Arbeitsschiffe, Arbeitsschiffe, Schlepper, Seeschiffe, Ölplattformen, Ölbohrtürme, Ölbohrtürme, Ölbohrschiffe, Industrieboote, Kranmasten, Kräne, Windturbinen, Windturbinenmasten, Signalmasten, Signaltürme, Eisenbahnsignaltürme, Eisenbahnsignalmasten, Ampelmasten, Hubkräne, Hubschiffe, Hubschiffe, Hubplattformen, Riggs, Lastkähne, Schwimmschiffe, Seeschiffe, Flussschiffe, Kanalschiffe , Fahrleitungsmasten, Eisenbahnfahrmasten, Straßenverkehrsmasten, Straßenbeleuchtungsmasten, Straßenbeleuchtungsmasten, Pontons, Tauchpontons, Tauchbooten, Tauchbooten, Unterwasserschiffen, Brücken, Brückenmasten, Dämmen, Unterwasser-Windturbinenschiffen, Unterwasser-Solaranlagen thermische Leistung verwendet wird.

## Revendications

1. Un système de concentration de rayons solaires comprenant une structure de mât (1.1) à projection verticale comprenant une pluralité de systèmes qui sont montés les uns sur les autres de haut en bas de ladite structure de mât (1.1), et dans lequel chacun desdits systèmes comprend un miroir de collecte plat (1.4), un miroir piano-concave (1.7), un miroir Plano convexe (1.6), un miroir plat intérieur incliné à 45 degrés (1.5) et un miroir plat extérieur incliné à 45 degrés (1.10), le miroir collecteur plat (1.4) de chaque système est soutenu par deux éléments en saillie horizontaux parallèles (1.3) qui soutiennent le miroir piano-concave (1.7) du système placé au-dessus du système concerné, le miroir piano-concave (1.7) faisant face à la structure de mât (1.1) et est positionnée au-dessous dudit miroir collecteur plat (1.4) et concentre les rayons solaires (1.8) déviés par le miroir collecteur plat (1.4) vers le miroir piano-convexe (1.6) qui fait face à l'opposé de ladite structure de mât (1.1) et je fais donc face au miroir piano-concave (1.7), le miroir plano-convexe (1.6) étant positionné devant et légèrement au-dessus dudit miroir piano-concave (1.7), et plus proche de ladite structure de mât vertical (1.1) que ledit miroir (1.7) plano-concave, le miroir plat intérieur incliné à 45 degrés (1.5) est positionné sous le miroir piano-convexe du système supérieur (1.6) et est partiellement orienté vers le haut en direction du miroir piano-convexe (1.6) et partiellement à l'écart de ladite structure de mât (1.1) et ainsi vers le miroir plat extérieur incliné à 45 degrés (1.10), qui est positionné horizontalement devant ledit miroir plat intérieur incliné à 45 degrés (1.5) et partiellement orienté vers la structure du mât (1.1) et ainsi vers le miroir intérieur incliné à 45 degrés (1.5), et partiellement orienté vers le bas en direction du miroir piano-concave (1.7) du système inférieur, qui est positionné sous ledit miroir plat extérieur incliné à 45 degrés (1.10), ainsi que sous la totalité de la surface du miroir collecteur plat dudit système inférieur (1.4).

2. Un système de concentration de rayons solaires selon la revendication 1, dans lequel le miroir plat incliné intérieur à 45 degrés (1.5) de chaque système et le miroir plano-convexe (1.6) du système inférieur sont tous deux soutenus par un élément commun horizontal en saillie (1.2), et sont donc montés l'un sur l'autre (1.5, 1.6), le miroir plat incliné intérieur à 45 degrés (1.5) étant monté sur le miroir piano-convexe (1.6) du système inférieur, de telles sorte que l'élément en saillie (1.2) horizontal soutienne à la fois le miroir plat incliné à 45 degrés intérieur (1.5) et le miroir piano-convexe (1.6) tout en étant positionné entre les deux (1.5, 1.6).

3. Un système de concertation de rayons solaires selon les revendications 1 à 2, dans lequel les miroirs piano-concaves (1.7) sont supportés chacun par un élément saillant vertical (1.9), soutenu par les deux éléments saillants horizontaux parallèles (1.3) sur lesquels lesdits miroirs piano-concave (1.7) sont fixés, de sorte que lesdits éléments en saillie horizontale (1.3) soutiennent également le miroir collecteur plat du système inférieur (1.4).

4. Un système de concentration des rayons solaires selon les revendications 1 à 3, dans lequel le miroir plat incliné extérieur à 45 degrés (1.10) est soutenu par un élément saillant vertical (1.11) qui se fixe au miroir piano-concave (1.7) placé en dessous de celui-ci.

5. Un système de concentration des rayons solaires (1.1) selon les revendications 1 à 4, comprenant un miroir collecteur extérieur plat (1.13) positionné vers l'extérieur et maintenu par un système de rotation actionné par un moteur électrique (1.14) qui se connecte au fond dudit collecteur extérieur plat (1.13), le système de rotation actionné par un moteur électrique (1.14) est relié à un élément saillant vertical (1.11) qui se connecte aux deux éléments parallèles saillants horizontaux (1.3) des systèmes inférieurs, de sorte que ledit miroir collecteur extérieur plat (1.13) est positionné devant chacun des miroirs de collecte plats dudit système (1.4) qui est soutenu par un système rotatif actionné par un moteur électrique (1.16) à l'extrémité supérieure dudit miroir de collecte plat (1.4) et qui est soutenu par les deux parties supérieures parallèles des éléments en saillie horizontaux (1.3) positionnés de chaque côté, de telle sorte que ledit miroir collecteur extérieur plat (1.13) soit constamment orienté de manière à refléter les rayons solaires (1.8) dans une direction horizontale en direction de la structure de mât vertical (1.1), de telle façon que si les rayons solaires (1.8) font saillie à des angles supérieurs à 45 degrés par rapport au sol, ledit miroir collecteur extérieur plat (1.13) réfléchit lesdits rayons solaires (1.8) vers le miroir collecteur plat (1.4), qui est incliné à 45 degrés afin de refléter ces rayons à 45 degrés verticalement vers le bas.

6. Un système de concentration de rayons solaires selon la revendication 5, dans lequel la surface desdits miroirs de collecte plats extérieurs (1.13) est orientée selon un angle qui est exactement perpendiculaire à l'angle de projection des rayons solaires (1.8) au sol, de telle sorte que lesdits rayons sont projetés sur les miroirs de collecte plats (1.4) qui réfléchissent lesdits rayons solaires (1.8) directement verticalement vers le bas, le tout étant commandé par l'unité de commande informatisée qui commande les systèmes de rotation actionnés par un moteur électrique (1.14) lorsque les rayons solaires (1.8) font saillie à un angle de 45 degrés ou moins par rapport au sol, de telle sorte que lesdits miroirs de collecte plats extérieurs (1.13) et ses éléments en saillie verticaux (1.11) et ses systèmes rotatifs (1.14) soient positionnés les uns au-dessus des autres, chacun à la même distance les uns des autres ainsi que de la structure du mât (1.1) qui soutient les diffèrent systèmes.

7. Un système de concentration de rayons solaires selon les revendications 5 à 6, dans lequel ledit miroir collecteur plat (1.4) est constamment incliné à un angle de 45 degrés, orienté en partie à l'horizontale et en direction opposée à la structure de mât (1.1) et en partie à la verticale vers le bas lorsque ledit miroir extérieur de collecte plat (1.13) réfléchit initialement les rayons solaires entrants (1.8) vers ledit miroir collecteur plat interne (1.4), de telle sorte que ledit miroir collecteur externe (1.13) est positionné à une distance horizontale plus grande de la structure de mât (1.1) que le miroir collecteur plat (1.4), de sorte que ledit miroir collecteur externe (1.13) comprend un composant de longueur verticale qui s'étend sur deux éléments en saillie horizontaux parallèles (1.3) lorsque ledit miroir collecteur plat externe (1.13) est incliné à son angle d'inclinaison le plus élevé par rapport au niveau du sol.

8. Un système de concentration de rayons solaires selon les revendications 1 à 7, qui comprend un miroir concave (3.3) qui est positionné à la partie inférieure (3.1) de ladite structure de mât (1.1), de telle sorte que ledit miroir concave (3.3) est placé sous le miroir piano-convexe (1.6) le plus bas placé le long de ladite structure de mât (1.1), étant donc placé juste sous les rayons lumineux concentrés (1.12), de telle sorte que lesdits rayons lumineux (1.12) soient réfléchis et concentrés approximativement horizontalement vers ladite structure de mât (1.1), et ainsi vers un miroir convexe (3.2) qui est encastré à l'intérieur de ladite partie inférieure (3.1) de ladite structure de mât (1.1), de telle sorte que lesdits rayons lumineux (1.12) accèdent au miroir convexe (3.2) par une ouverture creuse située entre ledit miroir concave (3.3) et ledit miroir convexe (3.2), de sorte que ledit miroir convexe (3.2) réfléchisse lesdits rayons lumineux concentrés (1.12) verticalement vers le bas dans un tuyau creux (3.7) ou canal (3.7) vertical dépassant, qui est noyé à l'intérieur de ladite partie inférieure (3.1) de ladite structure de mât (1.1), suivie d'un tuyau ou canal vertical (3.15), qui continue d'entraîner lesdits rayons lumineux concentrés (1.12) dans le sol ou le sous-sol sur lequel ladite structure de mât (1.1) est positionnée, de telle sorte que ledit miroir convexe (3.2) fait face en partie vers le bas et en partie vers ledit miroir concave (3.3), tandis que ledit miroir concave (3.3) est en partie dirigé vers le haut en direction dudit miroir piano-convexe (1.6) occupant la position la plus basse, et en partie vers ledit miroir convexe (3.2).

9. Un système de concentration de rayons solaires selon les revendications 1 à 8, qui comprend un système de rotation (3.4, 4.8) qui est actionné par un système électrique motorisé qui fait tourner ladite structure de mât (1.1, 4.6) autour d'un axe (1.15, 3.16). qui est positionné le long du milieu de la section transversale de ladite structure de mât (1.1, 4.6), de telle sorte que ledit axe (1.15, 3.16) soit toujours positionné en saillie dans la direction de projection de ladite structure de mât (1.1, 4.6), de sorte que ledit moteur électrique motorisé le système est situé sous le système de rotation (3.4, 4.8), qui est positionné au bas de ladite structure de mât (1.1, 4.6), de telle sorte que lesdits miroirs collecteurs plats (1.4) et les miroirs collecteurs plats extérieurs (1.13) seront toujours face aux rayons solaires entrants (1.8), dans lequel un système de production d'énergie comprend une turbine hydroélectrique (4.3) qui convertit l'énergie cinétique de l'eau entraînée par gravité (3.9) en électricité avant de passer sous ladite structure de mât (1.1, 4.6), dans laquelle ou lesquelles l'eau est convertie en vapeur et entraînée vers une ou plusieurs turbines à vapeur (4.11), qui actionnent les générateurs produisant ainsi de l'électricité.

10. Un système de concentration de rayons solaires selon les revendications 1 à 9 utilisé sur des navires flottants, y compris des navires, des barges, des bateaux, des pontons et des docks flottants, de telle sorte que ladite structure de mât à projection verticale (1.1) est utilisée flottant sur une mer, un lac, une rivière, un bassin ou un canal d'eau, tel que ledit navire flottant sur lequel est utilisée ladite structure de mât saillant verticalement (1.1), recueille l'eau (3.9) par gravité de l'eau (3.9) sur laquelle flotte ledit navire et que ladite eau (3.9) est entraînée par gravité au moyen d'une prise d'eau (3.12) placée sous la surface de l'eau, de sorte que ladite eau (3.9) s'écoule vers une zone d'évaporation (3.13) dans laquelle ladite eau (3.9) est convertie en vapeur pour entraîner des turbines à vapeur ( 4.11) qui, à leur tour, entraînent des générateurs, de telle sorte que lesdits navires puissent être amarrés au lit desdits mer, rivière, canal ou bassin hydrographique par des câbles rigides en acier reliant ledit lit à la surface inférieure dudit navire.

11. Un système de concentration de rayons solaires selon les revendications 1 à 10, comprenant une pluralité de structures de mât (1.1, 4.6) juxtaposées (4.6) suivant un motif linéaire sous lequel un tuyau de conduite d'eau (4.5) fait saillie à travers une zone d'évaporation (3.13) sous chaque structure de mât (1.1, 4.6), de sorte qu'un tuyau d'admission (3.12, 4.1, 4.2) se raccorde à un tuyau de distribution d'eau (4.4), qui distribue l'eau (3.9) dans une pluralité de conduites d'eau (4.5), de sorte que de l'eau passe sous chaque structure de mât (1.1, 4.6) et est transformée en vapeur qui est entraînée le long de chacun desdits conduits d'alimentation en eau (4.5) en un conduit de collecte de vapeur (4.9) qui se connecte à tous les conduites d'alimentation en eau (4.5) ensemble, et qui entraîne ladite vapeur dans un tuyau d'entraînement de vapeur (4.10) qui entraîne ladite vapeur dans au moins une turbine à vapeur (4.11), qui à son tour entraîne des générateurs pour produire de l'électricité, de sorte qu'une porte de régulation du débit d'eau (3.10) est situé à l'entrée de ladite conduite d'admission (3.12, 4.1, 4.2), qui est positionne dans la surface supérieure dudit tuyau d'admission (3.12, 4.1, 4.2), et est commandée par un contrôleur informatisé, qui commande l'actionnement de ladite porte de contrôle de débit d'eau (3.10) en fonction des données fournies par un capteur d'intensité lumineuse, qui est positionné à un point haut à l'extérieur, de préférence au-dessus de ladite structure de mât (1.1, 4.6).

12. Un système de concentration de rayons solaires selon les revendications 10 à 11, utilisé pour des applications de dessalement, comprenant donc un tuyau de sortie de sel le long du fond de ladite zone d'évaporation (3.13), de sorte que ladite structure de mât (1.1) à projection verticale puisse également être utilisée pour l'isolation de l'hydrogène et de l'oxygène au niveau de la zone d'évaporation (3.13) de ladite eau (3.9), étant donné que les températures et les pressions présentes sont suffisamment élevées pour qu'un tuyau de collecte d'oxygène et un tuyau de collecte d'hydrogène soient situés dans la zone d'évaporation (3.13), chaque tuyau comprenant une membrane pour collecter uniquement de l'oxygène ou de l'hydrogène, de sorte que chacun desdits tuyaux fournit séparément de l'oxygène et / ou de l'hydrogène aux zones de stockage et / ou à l'industrie, ainsi que de l'hydrogène servant de carburant aux ports, aux aéroports, aux stations-service et aux gares ferroviaires, devant servir de carburant pour la propulsion aérospatiale, la propulsion de véhicules routiers, la propulsion de chemin de fer et / ou la propulsion de navires en mer.

13. Un système de concentration de rayons solaires selon les revendications 1 à 12, qui fournit de l'énergie et / ou de la chaleur et / ou de l'eau et / ou est utilisé dans les zones montagneuses, les zones d'altitudes élevées, les zones de basse altitudes, les rives des lacs, les rives de la mer, des lacs et des rivières, les bords des rivières, les bords des mers, les bords des canaux et des bras de mer, les rives des canaux et des bras de mer, les bateaux, les vaisseaux, les canaux, les bras de mer, les sous-marins, les trains, les camions, les camionnettes, les remorques, les avions, les véhicules à effet de sol à coussin d'air, les véhicules à effet de sol, les véhicules maritimes, les véhicules de marine, les hélicoptères, les avions, les vaisseaux spatiaux, les satellites, les stations spatiales, les bâtiments, les maisons, les usines, les bâtiments d'usine, les tours de télécommunication et de communication, les aéroports, les tours de contrôle d'aéroports, les hôpitaux, les tours, les blocs d'habitation, les gratte-ciels, les carrières, les mines, les ports, les grues, les centrales électriques, les tours de refroidissement, les antennes, les navires océanographiques, les brise-glaces, les navires en mer, les éoliennes en mer, les navires citernes, les pétroliers, les porte-conteneurs, les navires de production d'énergie solaire thermique en mer, les vaisseaux offshore pour la production d'énergie thermique, les navires offshore, les bateaux de travail, les navires de travail, les remorqueurs, les vaisseaux, les plates-formes pétrolières, les tours de plateformes pétrolières, les tours de forage pétrolier, les navires de forage pétrolier, les navires industriels, les mâts de grue, les grues, les éoliennes, les mâts d'éoliennes, les mâts de signalisation, les tours de signalisation, les tours de signalisation de chemin de fer, les mâts de signalisation de chemin de fer, les mâts de signalisation, les grues à guillotine, les navires auto-élévateurs, les navires auto-élévateurs, les plates-formes de levage, les plates-formes de levage, les péniche flottantes, les chalands, les barques, les canots, les barges maritimes, les barges fluviales, les piliers de chemin de fer ferroviaires, les mâts de chemin de fer ferroviaires, les mâts de circulation routière, les mâts de signalisation routière, les mâts de rue, les pontons, les pontons submersibles, les barges submersibles, les bateaux submersibles, les bateaux offshore submersibles, les ponts, les mâts de pont, les barrages, les navires éoliens submersibles, les bateaux submersibles pour éoliennes, les bateaux submersibles solaires centrales thermiques, les usines de dessalement, les usines de dessalement en mer, les usines de dessalement submersibles, les usines de dessalement semi-submersibles, les barges semi-submersibles, les pontons semi-submersibles, les navires semi-submersibles, les navires semi-submersibles au large, les éoliennes semi-submersibles, les navires semi-submersibles de production d'énergie solaire, les brise-glace, les chantiers navals, les docks de chantiers navals, les cales sèches, les quais flottants, les docks semi-submersibles, les quais, les ports, les ports et chantiers navals.
